# EUROPEAN PATENT APPLICATION

(11) **EP 4 424 463 A1**
(43) Date of publication of application: **04.09.2024**
(21) Application number: 24160206.9
(22) Date of filing: 28.02.2024
(51) Int. Cl.: B23Q 1/01, B23Q 3/04, B27M 1/08, B27M 3/00, B23P 21/00

(54) **MACHINE FOR PROCESSING WALLS, IN PARTICULAR FOR WALLS MADE OF WOOD OR THE LIKE**

(30) Priority: 01.03.2023 IT 202300003684
(71) Applicant: Essetre S.r.l. Unipersonale, 36016 Thiene (VI) (IT)
(72) Inventor: PASQUALE, Enrico, 36040 Grumolo delle Abbadesse (Vicenza) (IT)
(74) Representative: Karaghiosoff, Giorgio Alessandro

(57) **Abstract**

Machine for processing walls, in particular for walls made of wood or the like, which machine comprises: a support structure for at least one working tool, movable in at least one direction with respect to at least one working station, or to the part being worked, for the execution of at least one processing in one or more zones of the processing part and in which the processing station includes two adjacent working zones aligned in a direction parallel to the direction of movement of the support structure of said at least one tool; the said support structure being movable along the entire extension of the processing planes of the said two working zones in such a way that the support structure can be translated in correspondence with and along the processing plane of the said first zone and of the said second working zone; a first of said two working zones being provided with a device for turning the wall being processed upside down; the second of the said two working zones being provided with a tilting member from horizontal to substantially vertical of the said wall being processed, which tilting member is provided with member for discharging of the prefabricated wall, the said first and second zones are provided with members for translating the wall being worked from one to the other.

## Description

The object of the present invention is a machine for processing walls, in particular for walls made of wood or the like, which machine comprises:
a support structure for at least one working tool, which support structure is provided with displacement members in at least one direction with respect to at least one working station and which support structure has members for moving said at least one tool along one or more directions of movement in the direction of and/or around one or more axes and in relation to said working station, i.e. to the part to be worked for carrying out at least one or a plurality of processes in one or more areas of said part to be worked.

In the field of building construction, a technology has been consolidated which involves the creation of prefabricated walls in wooden material or in combination of wooden material with other materials and which involves the creation of a frame made up of a plurality of crosspieces and longitudinal members connected to each other and at least partly crossed, the application to the two faces of the said frame of at least one plate or a combination of closing plates, the filling of the cavities between said lateral covering plates with different types of material, such as insulating material and other and the carving or removal by other types of processing of openings in said lateral covering plates.

These prefabricated walls are created with machines of the type described at the beginning which, in a non-limiting executive form, involve for example the installation on a work surface and in the correct relative position of the beams that constitute the crosspieces and longitudinal members of the wall frame, the fixing of said beams to each other and the application on the visible face of the frame of the covering plates which form a lateral face of the wall. This all takes place with the frame positioned in a substantially horizontal position. Said plates are positioned on the corresponding face of the frame and seamed using fastening elements to the beams that form said frame. Side covering plates of the frame are continuous and form a surface that completely closes the side of the frame. Therefore, these are subjected to carving and/or milling processes for the creation in predetermined positions of one or more openings provided in the prefabricated wall. Subsequently, the frame with the covering plates on one side of it is overturned, bringing the other side of the frame still without the covering plates into an accessible position, i.e. in a position facing upwards of the frame itself. The plates that form the corresponding lateral face of the prefabricated wall element are then positioned and fixed on this side of the frame. Generally this takes place after the spaces between the beams that form the frame have been filled at least partially with materials having different functions such as waterproofing, thermal insulation and others. These plates are also attached using fasteners to the beams of the frame. After fixing the plates that form this second lateral face of the prefabricated wall, the carving of the openings provided in the predetermined positions and coinciding with the corresponding openings already made in the other face of the prefabricated wall is carried out.

Machines of this type are currently known, which consist of a working station wherein a work surface is provided on which the wall frame is formed and on which all the working steps relating to the fixing of the beams to each other are carried out, the arrangement and fixing of the plates of material that form the two opposite lateral faces of the wall, the positioning of any filling material and the creation of the openings. To carry out these steps, the working station is equipped with organs for overturning the wall being processed thanks to which the lateral face of the already finished wall is brought to rest against the work surface for the application of the plates that form the corresponding face of the same, while the face of the frame still without said plates is brought upwards into an accessible position.

Currently the working steps are carried out partly by one or more tools carried by the support frame and partly by human workforce and/or possibly by anthropomorphic arms that replace it, as in particular in relation to the operations of positioning the beams that form the frame of the wall and the positioning of the plates as well as the positioning of the cavity filling material between the two faces of the prefabricated wall.

Known embodiments provide for example as a support structure for one or more processing tools a portal which is mounted on rails or guides parallel to a longitudinal direction of a work surface and which portal can translate along said rails and/or said guides and along the longitudinal extension of the work surface and therefore of a longitudinal dimension of the wall being processed.

Typically, the mobile portal can include a "five-axis" milling head, i.e. comprising a portal that translates along a first longitudinal X, and an additional translating portal along a third Z axis, vertical, which brings a bi-rotating head, rotable around two axes and in turn comprising an electrospindle holder-milling. An automatic tool change device can be associated with the electrospindle.

For example, overturning organs such as those described in document EP2875923 are known in the state of the art.

It appears clear that in the configuration described above, the working station is therefore occupied for the entire duration of the completion work on the prefabricated wall, so a new wall can only be started when the wall being processed in the machine has been finished and was downloaded from the work surface, i.e. from the machine itself.

The aim of the present invention is to make it possible to increase the productivity of machines for the construction of prefabricated walls of the type described above, without requiring excessive increases in costs.

According to an embodiment, the present invention provides a machine for processing walls, in particular for walls made of wood or the like, which machine comprises:
a support structure for at least one working tool, which support structure is provided with displacement members in at least one direction with respect to at least one working station and which support structure has members for moving said at least one tool along one or more directions of movement in the direction of and/or around one or more axes and relative to said working station, or to the part being processed, for carrying out at least one or a plurality of processes in one or more areas of said processing part and wherein
the working station comprises two working zones adjacent and aligned in a direction parallel to the direction of movement of said support structure of the said at least one tool;
said support structure being positioned on a carriage or sled sliding along a guide and/or a rail oriented in said direction of movement and which guide extends over the entire extension of the work planes of the said two working zones in a direction parallel to said direction of movement of the support structure, such that the support structure can be moved in correspondence with and along the work plan of said first zone and said second working zone;
a first of said two working zones being provided in combination with a device for turning the wall being processed upside down;
the second of said two working zones being provided with a horizontal to substantially vertical overturning member of said wall being processed, which vertical overturning member is provided with members for discharging of the prefabricated wall,
said first and/or said second working zone are provided with translation devices of said wall being processed from one of said two working zones to the other.

Thanks to this combination of characteristics, in the first zone of the working station, the frame is created to which a plurality of covering plates are applied on the visible face of the frame which form the corresponding facade of the wall and in which plates after their fixing the openings for windows and/or doors or other things are carved or otherwise created in the frame. The tools carried by the mobile portal, or by the aforementioned more generic support structure, are activated to carry out at least one or more of the operations for fixing the frame beams to each other, the plates to the frame beams and to create the openings in the said plates.

At the end of these construction steps, the overturning devices of the wall are activated which, again in said first zone, ensure that the wall being worked is overturned upside down, bringing the face of the same equipped with the plates against the work surface of said first zone and at the same time the opposite face of the wall frame upwards in an accessible position for carrying out further processing steps.

These consist in the positioning between the beams of the frame of filling material, such as, but not limited to, thermal insulating material or material having other functions and in the application of the plates of material that form the corresponding face of the wall, as well as in the creation of the openings provided on the said facade.

The carrying out of these operations takes place in the second working zone, in which the wall being processed is moved by means of translation members, thus freeing the first working zone. Therefore, while the aforementioned activities for completing the wall being worked are carried out in the second working zone, the first working zone is free to carry out the construction steps of a second prefabricated wall.

Thanks to the fact that the support structure of the said one or more working tools is mounted on a carriage or slide sliding along the entire extension of the said two working zones, the working tools can be brought to operate alternatively in the said first zone and in said second working zone.

Once the processing steps in said second working zone have been completed, the prefabricated wall is brought to a vertical position by oscillating lifting members and is always unloaded in said vertical position using carriages or conveyors for discharging.

These can be connected to a storage station where said prefabricated walls are brought by means of the said carriages for discharging. In an advantageous embodiment, the work surface both in said first working zone and in said second working zone can be constituted or comprise members for moving the wall being worked, which can be activated and deactivated alternatively.

In a preferred embodiment, the work surface on which the wall being worked rests is oriented horizontally and the wall being worked rests on it by gravity.

In one embodiment, the members for moving the wall being processed from said first to said second working zone are integrated into the work surface and alternated with one or more stationary supports and said members can be moved into the disengagement position of the wall being processed, in an engagement position thereof, in which they lift said wall from said one or more stationary supports, constituting at the same time the supports of the stationary wall.

In one embodiment, the displacement members are members for translation of the wall being processed in a direction parallel to the direction of movement of the support structure of said one or more working tools.

In yet another embodiment which can be provided in any combination with one or more of the previous embodiments, the translation members of the wall being processed are made up of rollers, one or more of which are rotated by at least one motor or independent motors or alternatively by one or more grippers around the perimeter of the wall being processed, which grippers can be moved along rails or guides oriented in the direction of translation of the wall being processed.

Another possible embodiment of the said translation members of the wall being processed can provide that these members are constituted by pushers and/or traction grippers or by a combination of these which cooperate with the head sides of the wall being processed or other sides or intermediate sections of these sides having at least one component transverse to the direction of translation of the translation wall, which pushers or grippers are motorized, are mounted on guides oriented in the longitudinal direction of the work surface and slide along said guides.

In a preferred configuration, the work surface has a length corresponding to or greater in a predetermined measure than the maximum double length provided for a prefabricated wall and a width substantially identical to or greater in a predetermined measure than the maximum height provided for a prefabricated wall, the said working zones being aligned with each other in the direction of the said length of the work surface and having substantially half of the overall length thereof and the support structure of the said one or more tools being mounted sliding by means of a carriage or a slide along at least one rail or a guide oriented parallel to said length extension of the work surface and arranged externally adjacent to one or both longitudinal edges of said work surface.

As regards the creation of the overturning device associated with said first working zone, these can be made according to one or more construction variants known to the state of the art.

In one embodiment these overturning device are made up of elements of the work surface of the said first zone, which the work surface comprises
two opposite support and movement frames both equipped with translation means in the direction of the width of the work surface and rotation means with respect to a fixed base frame, which two opposite support frames are configured in such a way as to allow each frame of support and movement to create the following arrangements:
   - lowered to a substantially horizontal position when working on a wall;
   - inclined upwards, in a substantially vertical position and facing the other opposite support and movement frame for the overturning of a wall carried by a first support and movement frame onto the second opposite support and movement frame and wherein
each of the two support and movement frames is substantially comb-shaped, with a longitudinal bar and a series of crosspieces fixed orthogonally to the respective longitudinal bar, while
each frame has at least two translation and rotation units, applied to respective crosspieces spaced apart from each other of the corresponding frame;
said units being interposed between a crosspiece of the corresponding frame and a corresponding underlying crosspiece of the base frame
each of said units further comprising a slide mounted sliding on a guide placed above the corresponding crosspiece of the base frame and to which the corresponding crosspiece of the support and movement frame is hinged, which slide is moved along said guide by means of motorized thrust and/or traction members.

In particular, according to one embodiment, the said overturning device of the wall being processed in the said first zone are made as described in document EP2875923.

As regards the lifting members of the finished prefabricated wall from the work surface of the second working zone, these members are oscillating and include a support surface or crosspieces of the wall being processed which form an oscillating frame around a longitudinal lateral axis of the work surface of said second working zones. In one embodiment, said lifting members can be made according to different known embodiments, such as, for example, one of the two frames of the overturing members described above.

According to an advantageous and preferred embodiment of the present invention, the said lifting members comprise a frame made up of a plurality of crosspieces and longitudinal members, which oscillating frame is articulated to a stationary base frame element by means of a articulated parallelogram levers system configured to generate an oscillation of the said frame around a horizontal axis and oriented parallel to the longitudinal extension of the work surface, as well as substantially coincident with or adjacent to a lateral edge of the same, a linear actuator being provided for activating said oscillatory motion between said oscillating frame and a stationary base frame element and are oscillated from the horizontal position to a vertical position wherein the support surface of the prefabricated wall is provided laterally facing outwards.

In one embodiment, a carriage for transporting said wall is provided laterally adjacent the lateral edge of the said work surface and substantially coinciding with the lower longitudinal edge of said overturning members, in said position substantially vertical or slightly inclined with respect to the vertical direction, intended for the transfer of the prefabricated wall to a warehouse for said walls.

According to an embodiment, said overturning member of the prefabricated wall is pivotally articulated to a base frame by means of an articulated parallelogram which comprises a stationary arm rigidly attached to said stationary base frame, at the ends of said stationary arm being articulated, in an oscillating manner around horizontal axes and parallel to the longitudinal side of the work surface, respectively two angled arms, preferably with angles having the intrados area oriented opposite to the central longitudinal axis of the work surface and which in turn they are connected to a fourth arm which is integral with or consist of an end segment of a corresponding crosspiece of the oscillating frame of the lifting member, respectively in correspondence with the end of said crosspiece in correspondence with the lateral edge of the longitudinal axis of said oscillating frame and of an intermediate point between said end and the central longitudinal axis of said oscillating frame, said segment being preferably made in the form of an angled arm so that the fulcrums of the two arms angled to it are not coplanar with respect to a plane parallel to a plane of support of the oscillating frame.

Thanks to this configuration of the articulation mechanism of the oscillating frame of the lifting member associated with the second working zone, to the basic stationary frame, said oscillating frame performs a combined oscillation path which allows the positioning of the said oscillating frame with an orientation vertical and with the support surface at a certain distance from the lateral edge of the stationary base frame, or from the longitudinal lateral edge of the work surface of the said second working zone.

According to a further characteristic, an intermediate zone 3 is provided between the first working zone and the second working zone, which zone constitutes a transitory rest zone of the support structure of the tool, into which said support structure is brought when in the first o in the second working zone, operations are carried out by robotic organs or by human personnel which can interfere with the movements of the support structure of the tool along the longitudinal extension of the said two working zones.

In one embodiment, said rest zone 3 is provided in combination with sensors for detecting the position of the support structure along the machine and sensors for detecting the presence in positions of at least partial occupation of the path of the said support structure along the said machine.

Thanks to this buffer zone, for parking the support structure of the tool or tools, or a support portal for the same, it is therefore possible to provide that the said portal alternatively engages the said parking zone when working in the first zone or in the second zone.

The rest zone is of such dimensions as to allow the two zones, the first and second zone, to be made safe with photoelectric barriers, so that an operator or a robotic organ such as an arm or similar, which carries out manual operations, is not hit from the portal itself.

Further characteristics and improvements of the present invention are the subject of the dependent claims.

In particular, as is evident to the technical person in the field, the control operations of the various parts such as the automatic and/or robotized working tools, the movement of the tool support structure along the work surface of the two or three zones of the processing, the activation of the translation members of the walls being worked and of the overturning and lifting members, as well as the control of the transfer carriage and the member for discharging of the finished wall from the second working zone to the said carriage, are carried out under the control of a control unit which can be a generic electronic computer, such as a PC or similar in which a logical control program is loaded and which executes, the control and detection peripherals of the operating status of the devices being connected to said computer the aforementioned various organs and tools and/or man-machine command interfaces of any type known to the state of the art.

The invention also refers to a method of manufacturing prefabricated walls which method provides for a machine which has one or more of the combinations of characteristics described above.

According to an executive form, said method presents the following steps:
in the first zone (zone 1) of the working station, the frame of the prefabricated wall is made to which a plurality of covering plates are applied on the visible face of the frame which form the corresponding face of the prefabricated wall and in which plates after their fastening to the frame, are notched or otherwise the openings relating to windows and/or doors or other being made, at least some of the said processes being performed by means of automatic robotic tools and/or at least in part, manually, by human personnel, which automatic means consist at least in part of one or more tools carried by the mobile portal, or by the aforementioned more generic support structure;
at the conclusion of these constructive steps, the said upside-down overturning device of the prefabricated wall being worked is activated when these members are integrated or associated with the said first working zone and which overturning provides for bringing the face of the wall being worked provided with the slabs in a position facing against the work surface and contextually the opposite face of the prefabricated wall frame facing upwards in an accessible position for carrying out the further processing steps;
said further working steps being perfomed in said second working zone (zone 2), in which said wall being worked on is transferred by translation and which further working steps include:
   the positioning of filling material between the beams of the frame, such as, but not limited to, thermal insulating material or material having other functions, the application of the slabs of material which form the corresponding face of the wall, as well as the creation of the provided openings on the said facade,
   said operations being performed by means of automatic robotic tools and/or at least in part, manually, by human personnel, which automatic means are constituted at least in part by one or more tools carried by the mobile portal, or by the aforementioned more generic support structure, which has been moved within the second working zone,
   while simultaneously with the execution of said further processing steps of a prefabricated wall in said second working zone of the machine's work surface, the initial processing steps of a new prefabricated wall are performed in the first working zone, as the mobile portal, i.e. the support structure is moved again to the first working zone once the processing operations in the second working zone have been completed and
   the finished prefabricated wall present in the second working zone being unloaded therefrom by means of the lifting members, before the passage of the new wall being worked on from said first working zone to said second working zone.

According to a further characteristic, when an intermediate rest zone is provided between said first and said second working zones,
the presence of obstacles along the path of movement of the support structure of the tool(s) is monitored;
and said support structure is commanded automatically or by command to move into said rest zone when the presence of an obstacle along its path of movement is detected;
and said support structure is held in said rest zone at least as long as said obstacle is present along its path or said support structure is only moved along the working zone in which said obstacle is not present.

In an executive variant of the method, the processing of a wall can include working steps that require the wall to be turned upside down several times and therefore the method can involve transferring a prefabricated wall being processed into said second working zone, again from said second working zone, behind said first working zone, in which processes are performed which required the execution of working steps provided in said working zone. This transfer backwards from the second back into the first working zone can also include one or more upside-down overturns of the prefabricated wall which is subsequently returned to said second working zone.

The transfer from the first to the second working zone and vice versa can take place several times and in any case the final step before unloading must take place in the second working zone.

It is obvious that the working in the first working zone of a further prefabricated wall can only take place when the process does not involve a backward transfer of a prefabricated wall from the second working zone to the first.

Furthermore, in one embodiment the rest zone can be of such length as to completely house within it a prefabricated wall being worked, forming a buffer zone which for example allows simultaneous processing of two prefabricated walls even when they must be transferred back and forth between a first and a second working zone, in this case the rest zone can also assume the functions of an intermediate working zone. In this case, according to a possible variant, it is possible to provide two independent support structures each with its one or more tools.

The characteristics described above in one or more combinations and configurations and other characteristics and advantages of the present invention will appear more clearly from the following description of some executive examples illustrated in the attached drawings in which:
Fig. 1 is a perspective view from above on an executive example of the present invention, in which the support structure of the one or more tools is made in the form of a bridge structure arranged astride the work surface and supported by lateral carriages sliding on respective longitudinal guides and provided along the two longitudinal lateral edges of the said work surface, while the seventh support structure is in an initial position of operational readiness.
Figure 2 is a view similar to that of figure 1, in which the overturning members of the prefabricated wall in the first working zone are oscillated upwards to an angular position intermediate between the horizontal and vertical positions.
Figure 3 is a view similar to that of figure 1, in which the lifting members of the prefabricated wall in the second working zone are oscillated upwards to an angular position intermediate between the horizontal and vertical positions.
Figure 4 is a view similar to figure 3, but with the lifting members of the second working zone in the end position with the support surface of the prefabricated wall in a vertical or substantially vertical position.
Figure 5 is a top plan view of the machine according to the embodiment of the previous figures.
Figure 6 is a view similar to that of figure 5, but with the tool support structure moved to the intermediate rest zone between working zone 1 and zone 2 and ready to operate alternatively in zone 1 or zone 2.
Figure 7 shows a lateral elevation view and in the direction of the longitudinal axis of the work surface of an embodiment of the machine according to the present invention and according to the previous figures 1 to 6.
Figure 8 shows an enlarged perspective view, on the oscillating lifting means of the second working zone, in a lifting position.
Figure 9 shows a lateral elevation view in the direction of the longitudinal axis of the work surface of the second working zone in which the structure and the means of articulation of the lifting members to a stationary base frame of the said work surface are visible and in which the support surface of the prefabricated wall of the lifting members is oriented horizontally.
Figures 10 and 11 show the lifting members in an intermediate oscillation position with respect to the horizontal and vertical position and according to two different cross-section planes, i.e. intersecting the longitudinal axis at different points thereof respectively.
Figure 12 shows a view similar to the previous ones with the lifting members in the end position of the vertical support surface.
Figure 13 shows an enlarged detail of the overturning area of the wall being worked on.
Figures 14 to 20 each show a step of the process of overturning the wall being worked, performed with overturning members according to an exemplary embodiment of the present invention.

With reference to the figures, these show an exemplary and non-limiting embodiment of the present invention.

A machine for the production of prefabricated walls includes a work surface indicated globally with 1 which has a pre-established longitudinal extension L and a pre-established extension T and which is made up of transversal elements supporting the wall being processed (not illustrated here in detail).

The length L of the work surface is expected to be at least identical or greater for a pre-established measurement to double the corresponding dimension of the prefabricated wall that can be created with said machine, while the width T of the said work surface is at least identical or slightly greater than the corresponding maximum dimension of the prefabricated wall that can be created with the said machine.

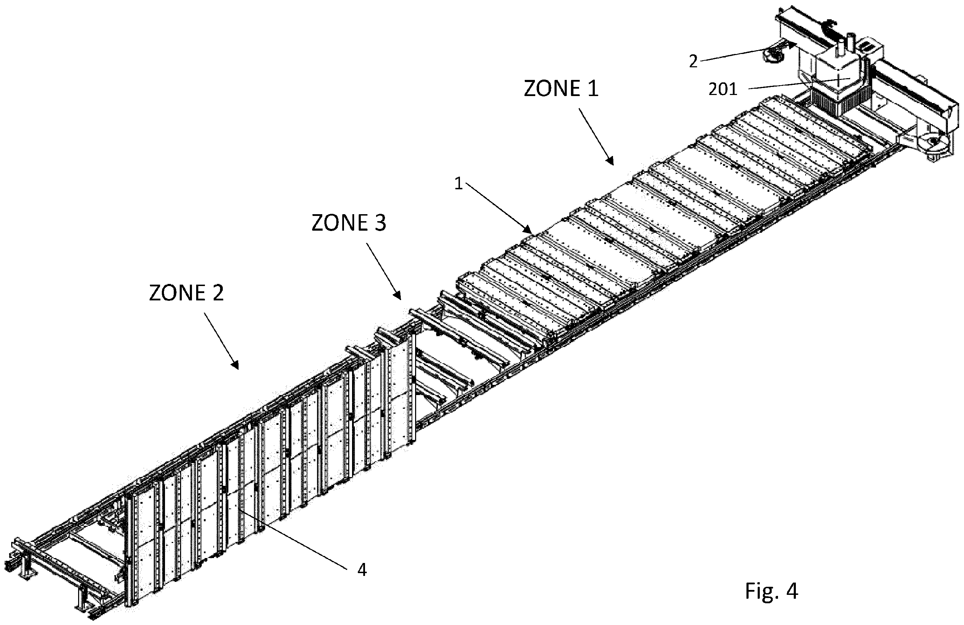

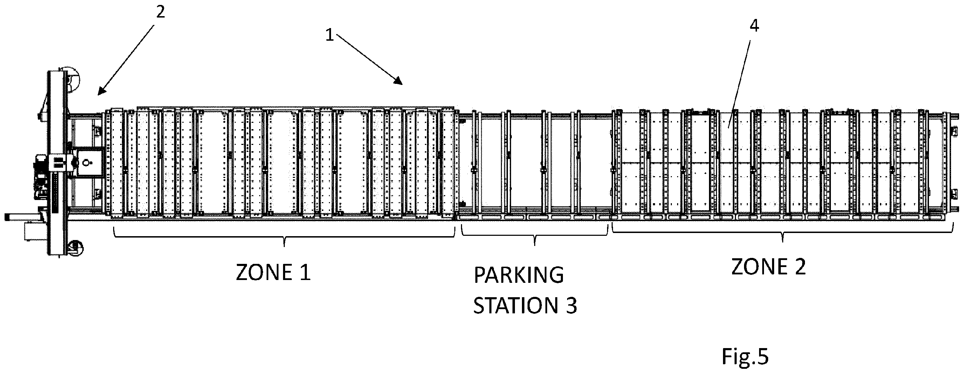

As will also appear more clearly from the following detailed description, said length L is divided into two working zones indicated with Zone 1 and Zone 2 in figures 4 and 5 which zones are arranged in succession with each other, with reference to the longitudinal extension of the work surface 1.

In an embodiment between said two zones 1 and 2, a further zone can be interposed, as shown in the figure, intended in the present case for overturning the wall being worked so as to bring the face respectively opposite to the work surface of said wall into position facing and adhering to said work surface and the opposite face in a position facing upwards and accessible.

Along the overall longitudinal extension of said work surface and therefore along the entire zone 1 and along the entire zone 2, as well as along the possible intermediate zone they extend on at least one longitudinal side, in the present case on both longitudinal sides of the work surface 1, translation guides parallel to said longitudinal side or sides on which a support structure 2 is slidably mounted. This translates along said guide or guides thanks to a corresponding slide or a corresponding motorized carriage and carries cantilevered into position vertically superimposed on the work surface at least one processing head 201. The processing head is made to be displaceable along at least two directions, at least one of which is transverse to the longitudinal extension of the work surface and at least one vertical direction, thanks to which a working tool it can be translated for the entire transversal extension of the work surface 1 and can be moved towards and away from said work surface.

Preferably and advantageously the processing head 201 allows the working tool to perform movements according to further axes, such as for example oscillatory movements around the vertical axis and/or the transverse axis and/or the longitudinal axis.

Support structures 2 are known in the state of the art and are widely used, the processing heads of which are mounted on supports which allow movement of the working tool according to five or more axes.

In a possible embodiment, the processing head 201 includes at least one motorized spindle 202 on which various working tools can be mounted alternatively.

A further variant can provide that the processing head 201 can automatically replace the working tool, a magazine 203 being provided for one or more working tools and members for automatic replacement of the working tool.

In the embodiment illustrated in the figures, the support structure 2 has a bridge configuration and the processing head 201 can be moved along the crosspiece 204 of the said support structure as well as moveable both vertically 205 and possibly also in the longitudinal direction of the work surface.

The longitudinal movement of the tool can take place either thanks to the translation in the longitudinal direction of the entire support structure 2 or by providing a dedicated combination of guide and longitudinal slide.

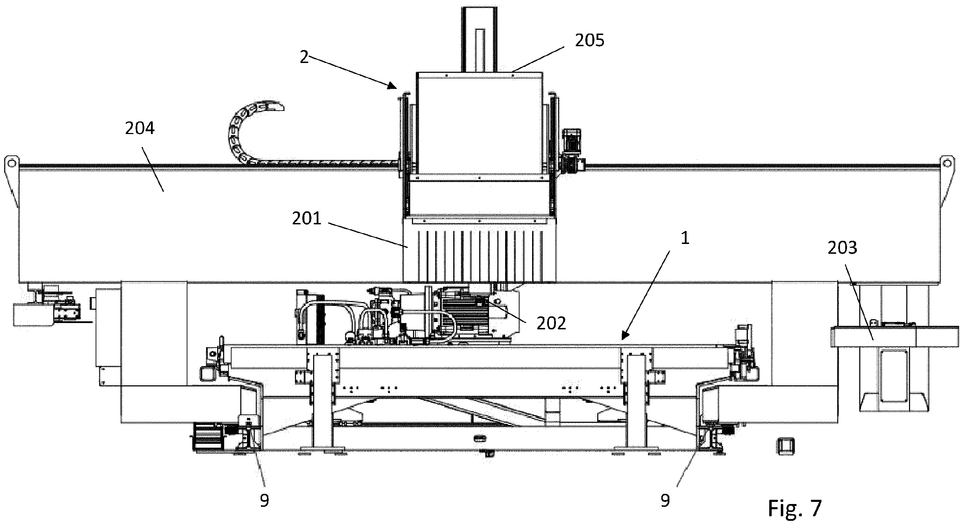

Figure 7 shows an enlarged view in the direction of the longitudinal axis of the work surface 1 which is parallel to the direction of translation of said support structure 2.

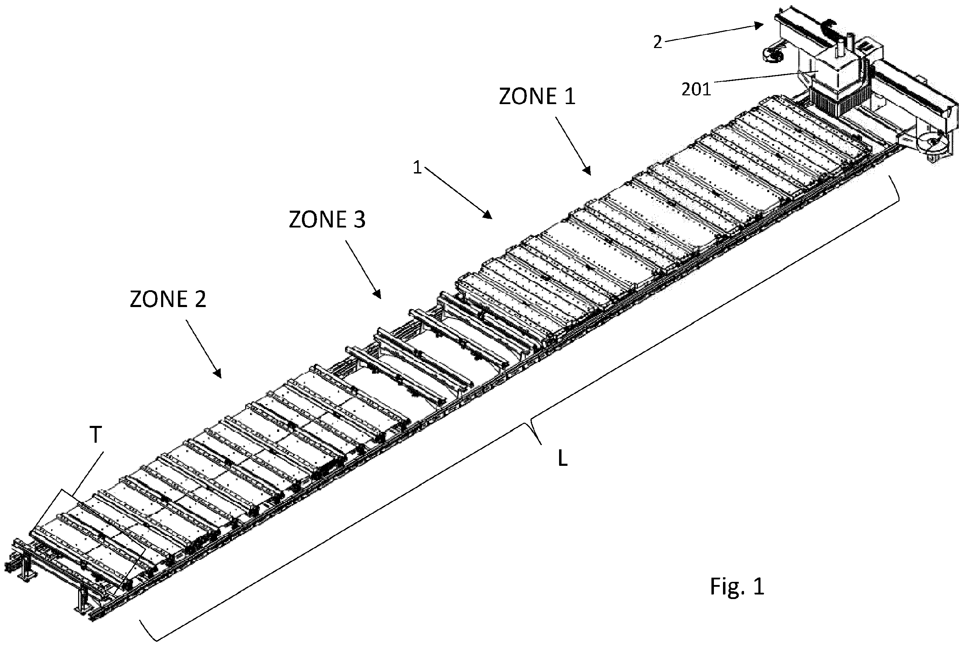

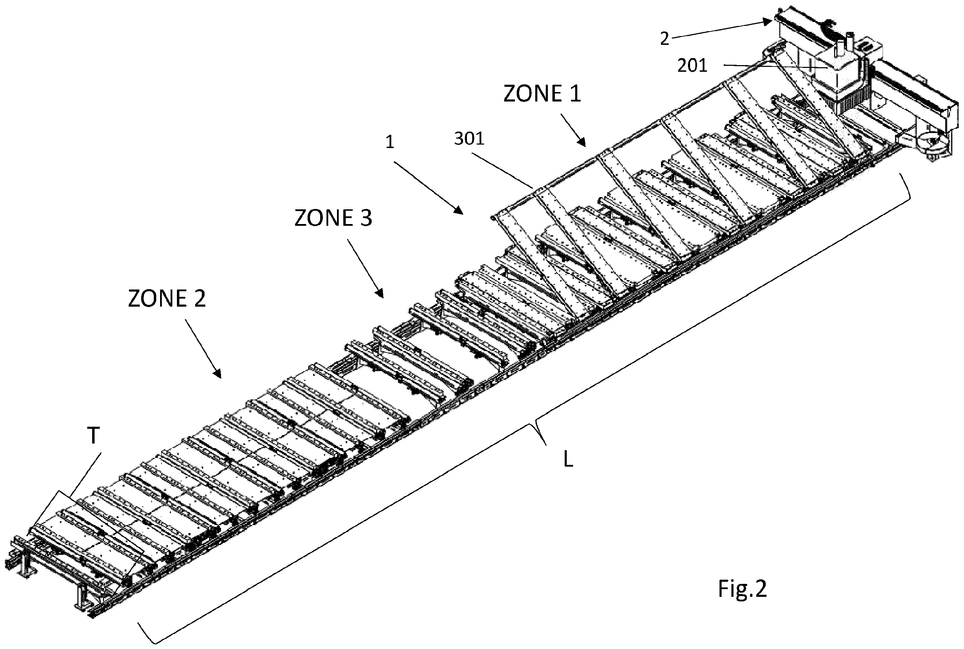

Again with reference to the executive example illustrated in figures 1 to 6, between the working zone 1 and the subsequent working zone 2 indicated with zone 1 and zone 2 there is a rest zone indicated with 3, in which the support structure 2 of the working tools is positioned in a ready condition to operate alternatively in the first or second working zone and when manual operations are performed in said zones by the staff or possibly also operations by robotic organs, such as robotic arms or similar which can interfere with the translation path of said support structure 2 along the corresponding working zone 1 or zone 2. The movement and temporary retention of the structure 2 in the rest zone 3 can take place thanks to sensors detecting the presence of obstacles in its path, such as human personnel and/or robotic organs or other.

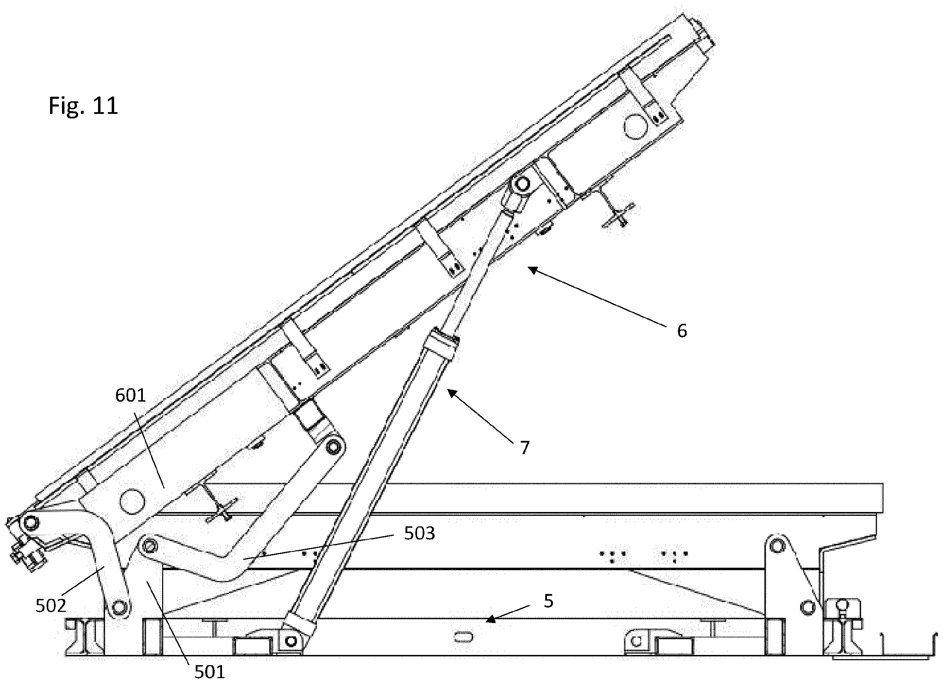

The working zone 2 instead has a lifting member 4 which is designed to bring the finished prefabricated wall from the horizontal working position to the substantially vertical discharging position, from which the finished prefabricated wall can be picked up by a discharging carriage (not illustrated) and transferred to a warehouse (also not illustrated). In figure 11 which shows the lifting members 4 in the vertical position, the rail or guide 5 on which the discharging carriage is mounted is visible.

As previously indicated, the two working zones 1 and 2 are intended for processing the prefabricated wall on one of the two opposite faces of the same and of the corresponding frame respectively.

In particular, according to a known construction process, the work surface of the working zone 1 is used to arrange on it, in the correct position and relative orientation, the beams intended to form the frame of the prefabricated wall and to fix the said beams together. Furthermore, in the working zone 1, covering plates are positioned on said frame which are fixed to the frame beams by means of fixing or stapling elements. Finally, a further processing step may involve the perimeter trimming of the covering plates, to eliminate parts exceeding the perimeter defined by the frame and also the creation by carving or milling of openings intended to accommodate windows and/or doors.

Said operations can be carried out in whole or in part by automatic and motorized processing means or by manual actions.

In particular, according to an embodiment, the supporting structure 2 for one or more working tools can provide for the presence of milling machines and/or saws for carrying out the aforementioned cuts of the parts of plates protruding beyond the perimeter edges of the frame and for creation of openings.

Alternatively, it is also possible that the support structure is provided with a tool for seaming said plates to the beams of the frame of the prefabricated wall, such as for example nail heads or the like.

The positioning of the beams for the construction of the frame and the fixing of said beams to each other can take place both automatically and using robotic actuators, such as for example robotic arms equipped with end effectors capable of carrying out the aforementioned operations.

The positioning of the plates on the frame and/or their fixing to the frame beams can also be carried out manually or even using robotic devices.

Cutting of protruding parts and openings is generally done using the tools on the support structure 2.

At the end of the aforementioned operations which involve one of the two opposite faces of the prefabricated wall, the overturning organs 301 provided integrated in the working zone 1 are activated and the wall is brought with the face to which the plates have been applied into the said working zone 1 to rest against the work surface and with the opposite face of the frame facing upwards in an accessible position for carrying out further processing steps.

These are carried out in the working zone 2, whereby the working zone 1 is freed and can be used to carry out the aforementioned manufacturing steps of a further prefabricated wall in said zone 1, while the wall in zone 2 is subjected to the application steps of the slabs to the frame beams and to the steps of creating the openings.

Optionally, before positioning the plates on the frame and fixing them to the same, in the zones interposed between the various beams of the frame one or more layers of one or more filling materials having different functions, such as thermal insulation and waterproofing functions or vapor barrier or other, can been arranged.

Also in relation to these finishing steps of the second face of the prefabricated wall, at least for cutting the parts of the plates protruding beyond the perimeter edges of the frame and at least for creating the openings, the tools provided on the support structure 2 are used.

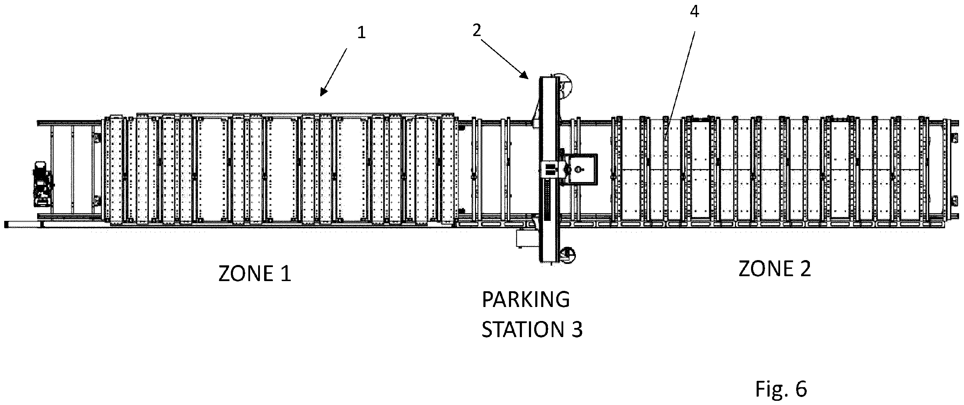

As shown in figure 6, in this case, the support structure of said one or more working tools is translated up to the initial end of the working zone 2 which is directly adjacent to the rest zone 3 interposed between the exit end of the zone 1 and the entry end of zone 2. During the processing steps said structure can move from the said rest zone 3, to said zone 2 and along the longitudinal extension of the working zone 2 to bring the tools to the different processing positions with respect to the longitudinal extension of the prefabricated wall, similarly to what happened during the processing of the wall in working zone 1. At the end of the planned machining operations for the tools present on the support structure 2, said structure 2 is automatically transferred again, that is, it automatically moves again to the rest zone 3 and/or possibly to the end of zone 1 opposite to zone 2, to be ready to carry out the work required for a new wall prepared for work in zone 1.

Although the illustrated figures do not show in detail members for translation of the wall being worked from said working zone 1 to working zone 2, the work surface 1 can be provided with such members which can be created according to various technical solutions known to the skilled person in the art and from which he can select from time to time those he deems most suitable.

A possible embodiment may provide that the work surface of the various areas is provided with crosspieces to support the wall being processed, at least some of which are stationary and are spaced in the longitudinal direction of the work surface, while in intermediate positions or laterally alongside the said crosspieces, always in the longitudinal direction of the work surface, can be provided with translational members that can be activated and deactivated. These can be, by way of non-limiting example, a plurality of horizontal rollers, at least some of which are motorized and which can be moved from a lowered position with respect to the support surface defined by the stationary crosspieces and therefore a position not in contact with the wall being worked on, in a position in which the rollers are in contact with said wall being worked and in a position raised beyond said stationary crosspieces in which they also lift the wall being worked from them. Therefore, the operation of the motorized rollers determines the advancement translation of the wall from one of the working zones to the other. When the wall has been transferred to the correct position in the next zone, said rollers are lowered and the wall rests on the stationary crosspieces of the said working zone.

The correct positioning in the various areas with reference to the longitudinal and/or transversal position can be obtained thanks to limit switches that can be activated and deactivated in various positions and/or guides and/or also optionally in combination with position sensors.

With reference to the embodiment shown in figures 1 to 6, the overturning members are integrated into the working zone 1, with support crosspieces of the wall being worked being also provided in this case, which oscillate around an axis parallel to the longitudinal axis of the work surface and/or translatable in a direction transversal to this axis and which interpose like a comb to the stationary crosspieces of a base frame and/or also to the translation members.

Translation members are also possible, consisting of pushers or traction grippers which can be moved in the longitudinal direction of the work surface and which cooperate respectively with the rear and front sides of the wall being worked.

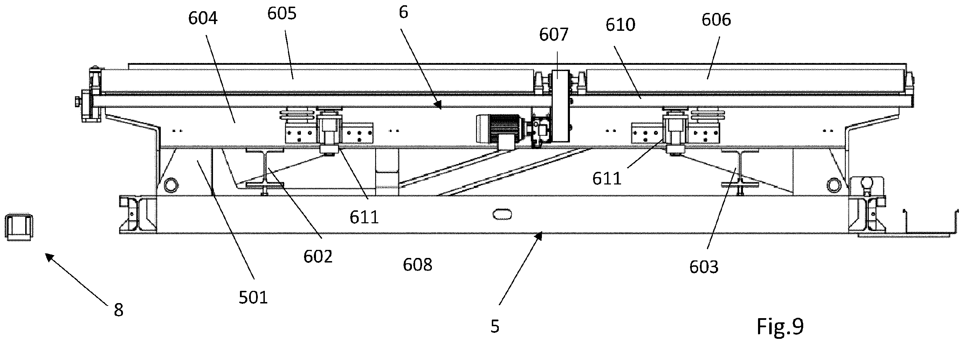

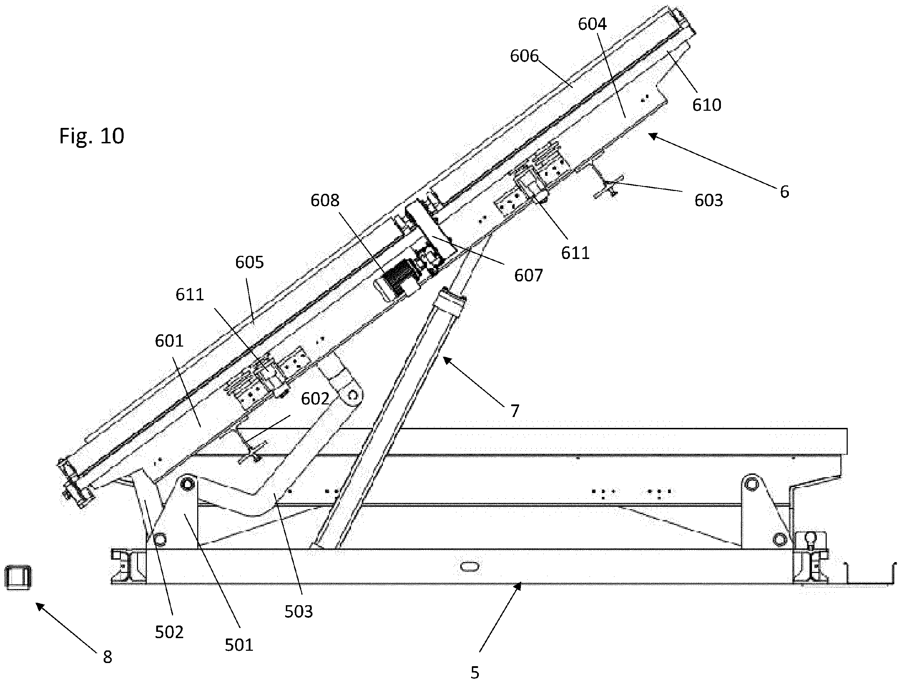

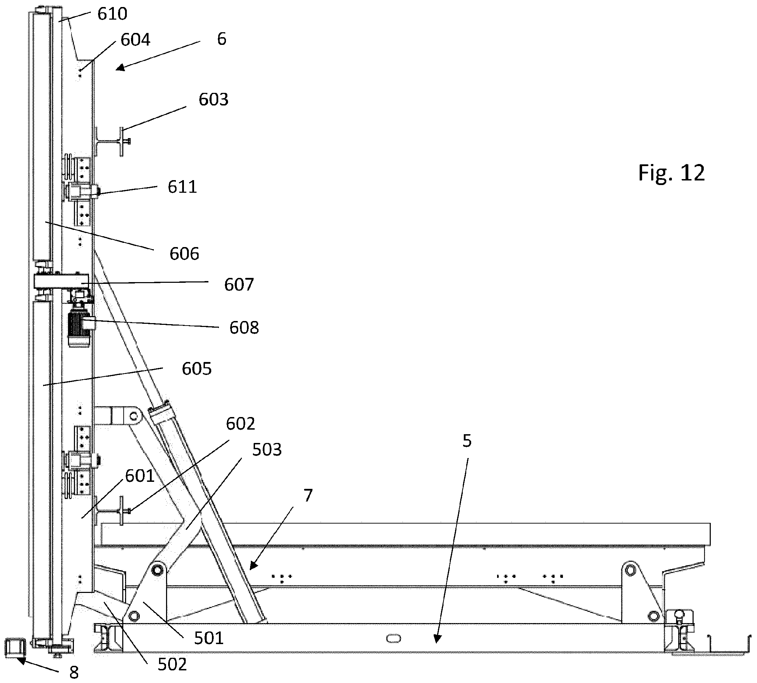

With reference to figures 9 to 12, these show construction details of a preferred embodiment of the oscillation, i.e. lifting members 4 associated with the working zone 2 and with which a finished prefabricated wall is unloaded from the same to a transfer carriage not shown.

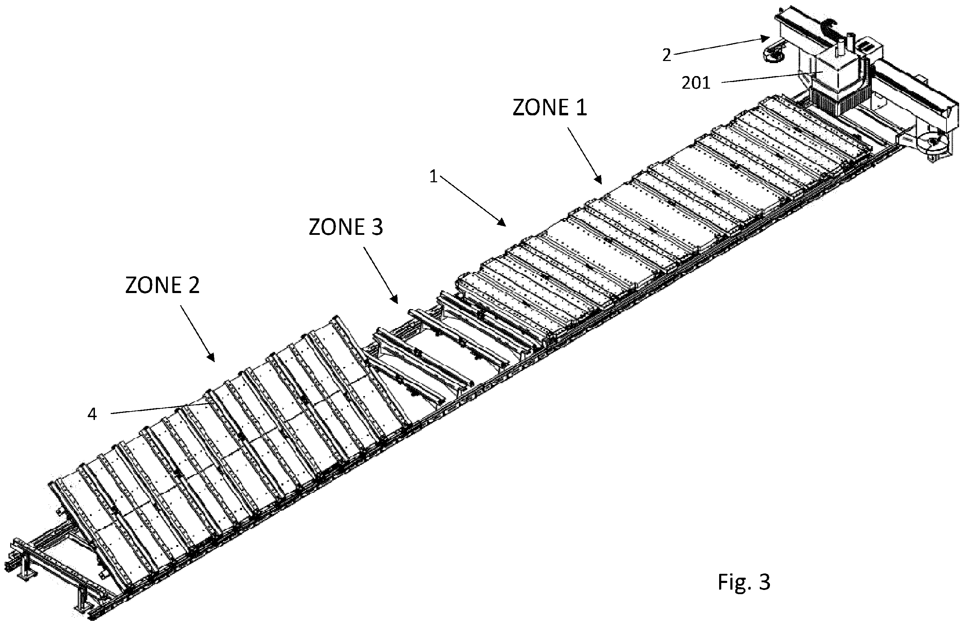

As is evident from figures 3 and 4, in the illustrated embodiment, the entire work surface of the working zone 2 is supported in an oscillating manner from the horizontal position to the vertical position, thanks to a rotation around a substantially coinciding horizontal axis and/or or at least close to the longitudinal edge of the work surface itself.

Since the finished prefabricated wall must be brought onto the support surface of a transfer carriage and/or at least as close as possible to it and since the sliding guide and/or the sliding track of the said carriage must be located beyond the adjacent transfer guide translation of the support structure 2 of the working tool(s), according to the embodiment shown, the work surface is articulated to a stationary frame 5 by means of an articulated parallelogram.

In particular, the work surface in the working zone 2 includes a stationary base frame 5 and an oscillating frame 6 which constitutes the support surface for the lifting members.

The structure of the oscillating frame 6 and the stationary one can be formed by a combination of longitudinal members and crosspieces as shown by way of example in the figures.

Between one or more of the crosspieces that form the stationary frame and a coinciding crosspiece of the oscillating frame 6 there is an articulation mechanism in the form of an articulated parallelogram in such a way that the stationary frame 5 and the oscillating frame 6 are constrained to each other at length intervals pre-established.

The articulated parallelogram includes a stationary arm 501 which has two articulation fulcrums spaced apart by a predetermined amount. Preferably said two articulation fulcrums are provided in the zone of one of the two longitudinal sides of the stationary frame 5 and the oscillating one 6.

According to one embodiment, said two fulcrums are spaced both in the transversal direction of said frames 5 and 6, and in the vertical direction, the innermost one being provided at a higher vertical level than the outermost one in relation to the central longitudinal axis of said frames 5 and 6.

A corresponding arm 502, 503 is articulated to each fulcrum of the stationary arm 501. Said two arms are made at an angle and delimit an angle greater than 90 degrees on the intrados side, with the arms 502 and 503 facing with their intrados side in a direction concordant with each other and in particular in a direction opposite to the longitudinal central axis of the two frames 5 and 6. A further arm 601 is articulated respectively to the ends of the two arms 502 and 503 opposite to those articulated to the stationary arm 501.

As illustrated in the present example and not in a limiting way, the farthest arm 502 from the central longitudinal axis of the two frames 5 and 6, is articulated directly to the longitudinal edge of the oscillating frame, while the arm 503 is articulated to the frame 6 in a position intermediate between the longitudinal lateral edge and the central longitudinal axis.

According to yet another characteristic, the two fulcrums of the two arms 502 and 503 of the arm 601 constituted by a sector of the transversal extension of the oscillating frame 6, are provided distanced from each other also in the direction of the thickness of the said frame, or of an axis perpendicular to the plane subtended by it and respectively the arm 502 is articulated to an axis substantially at the level of the upper plane of the said oscillating frame 6, while the arm 503 is articulated to a lower extension of the lower side of said oscillating frame 6, forming said points of joint a sort of angled arm.

In a more internal position towards the central axis of the two frames 5 and 6, they are connected to each other by a linear actuator 7, such as a hydraulic, hydraulic cylinder, an electromechanical, electro-hydraulic linear actuator or other types of linear actuators, from which the expert in the field can choose according to the needs of the case.

It is clear from the description of the example that in one embodiment, the oscillating frame can have a plurality of support crosspieces of the prefabricated wall which are spaced apart from each other in a pre-established amount and which are interposed like a comb with stationary support crosspieces of the stationary frame 5 of the base and/or also with possible elements for advancing the wall along the work surface such as motorized rollers or similar according for example to what has already been described previously.

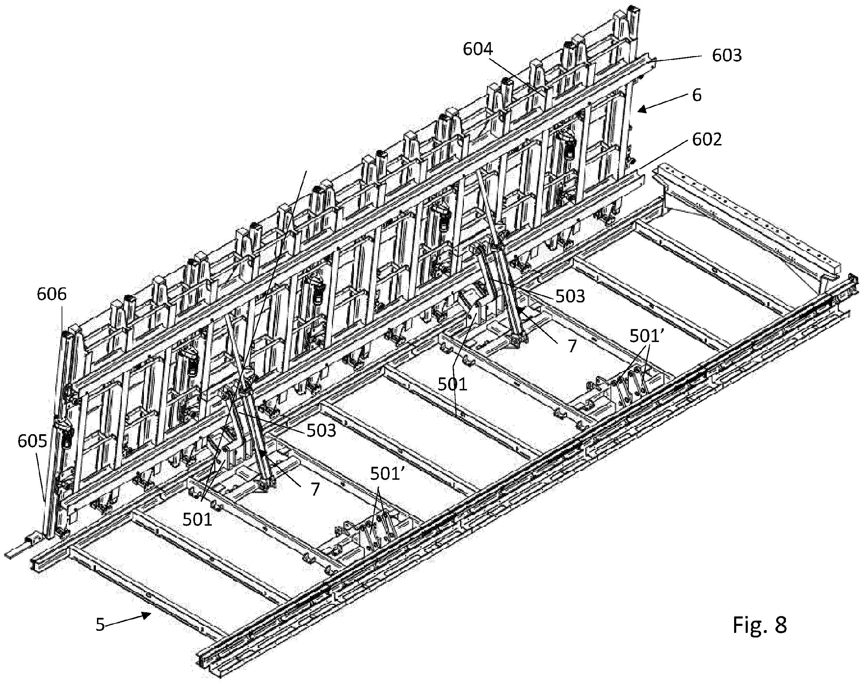

With particular reference to figure 8, the stationary frame 5 is arranged for the articulation of the oscillating frame 6 in correspondence with the opposite longitudinal lateral edge of said stationary frame.

In particular, this arrangement provides that in a position transversely coinciding with the stationary arms 501, symmetrically identical stationary arms 501' are provided, also on the side opposite to that of the fulcrum of the mobile frame 6 to the stationary frame 5.

Similarly, on said side opposite to that of the fulcrum and in the correct relative position, the stationary arms 501 are associated with an articulation terminal of the lower end of the linear actuator for oscillation of the mobile frame when it is provided as fulcrum to the corresponding longitudinal side.

From figure 8 it is also clear that the articulated parallelogram provides two stationary arms 501 side by side and with fulcrum axes coinciding with each other for corresponding angled arms 502, 503.

In particular, each stationary arm 501 is made up of two elements parallel to each other while the ends of the angled arms 502 and 503 are positioned between the two parallel elements and are supported oscillating around axes supported with their ends in corresponding seats provided coinciding axially in the two parallel elements forming each stationary arm 501.

Each arm of each articulated parallelogram is therefore composed of two arms placed side by side respectively.

As is evident from figures 8 to 12, the oscillating motion of the mobile frame 6 obtained thanks to the articulated parallelogram allows the lower longitudinal end of the oscillating frame 6 to be brought into a position directly laterally alongside a rail 8 or a sliding guide for a transfer carriage of said prefabricated wall, bypassing the sliding guide, or passing beyond the longitudinal sliding guide for the support structure 2 of the tool or tools without thus interfering with the same. In this way the finished prefabricated wall is brought to the best transfer position from the mobile frame 6 of the lifting means 4 to the transfer carriage (not shown).

Regarding the transfer of the wall from the lifting members 4 or from the oscillating frame 6 thereof to the transfer carriage, these can be made in any way and are known to the state of the art.

In figure 7 the sliding guides or rails of the support structure 2 of the working tool(s) are visible and are indicated with 9. These guides are oriented parallel to each other and in the direction of the longitudinal axis of the work surface, on the two opposite sides of the work surface 1, and in the illustrated but non-limiting embodiment, the tool support structure 2 is configured as a bridge portal.

Always referring to figures 8 to 12, these show a possible configuration of the translation members in the longitudinal direction of the walls being worked. In this case, as already highlighted previously, at least the mobile frame is made up of a combination of at least two longitudinally oriented longitudinal members indicated with 602 and 603 which are connected by a plurality of crosspieces 604. These crosspieces 604 are provided at a certain distance between them and in at least some or all of the spaces between two adjacent crosspieces, motorized translation rollers indicated by 605 and 606 are provided.

In this case, instead of a single roller which extends substantially along the entire length of the crosspieces, each roller is formed by two coaxial rollers 605 and 606, mounted to rotate around a common axis of rotation and which have a shorter overall length of the length of the crosspieces 604, so as to allow a central area to be left free between each pair of coaxial rollers. Therefore, the rollers are arranged on two parallel rows of coaxial rollers 605, 606 which are spaced apart from each other at the facing head ends and whose coaxial rotation axes are rotated by means of a common transmission belt 607 driven by a motor 608.

Each pair of rollers 605, 606 is mounted on a common frame which is supported and can be moved in a vertical direction, i.e. in a direction perpendicular to the plane subtended by the frame 6 and can be moved in a lowered position in which the covering surface of the rollers is at below the upper side of the crosspieces 604, resting the wall in a position in which the covering surface of the rollers is at a higher level than that of the upper sides of the crosspieces and the wall rests on the said rollers and is raised by the crosspieces 604.

Figures 8 to 12 show two linear actuators for lifting and lowering the rollers 605, 606 which are indicated with 610 and which are placed between the crosspieces 604 of the mobile frame 6 and a frame 611 supporting the rollers 605, 606.

An embodiment may provide that the drive belt is common for more than a single pair of coaxial rollers 605, 606 and even for all the coaxial pairs of rollers associated with the mobile frame 6 of the second working zone.

A similar construction of the longitudinal translation members of the walls being worked between the individual zones 1, zone 2 and zone 3 can be envisaged at least for the work surface of zone 1 and/or possibly also for the rest zone 3.

It is clear from the construction of said longitudinal translation members of the walls that the driving belt is provided in a lowered position with respect to the upper side of the roller shell surface so as not to interfere with them.

In relation to the combination of the translation members of the walls or of the rows of coaxial rollers 605, 606 it is also clear that these rollers, as well as the motor 608 and the drive transmission 607 and when provided the mounting frame 610 supporting the rollers 605, 606, of the engine 608 and of the transmission 607 and also the lifting and lowering actuators 611 are supported by the movable frame 6 and move together with it during the stroke of the lifting oscillation from the horizontal to the vertical position.

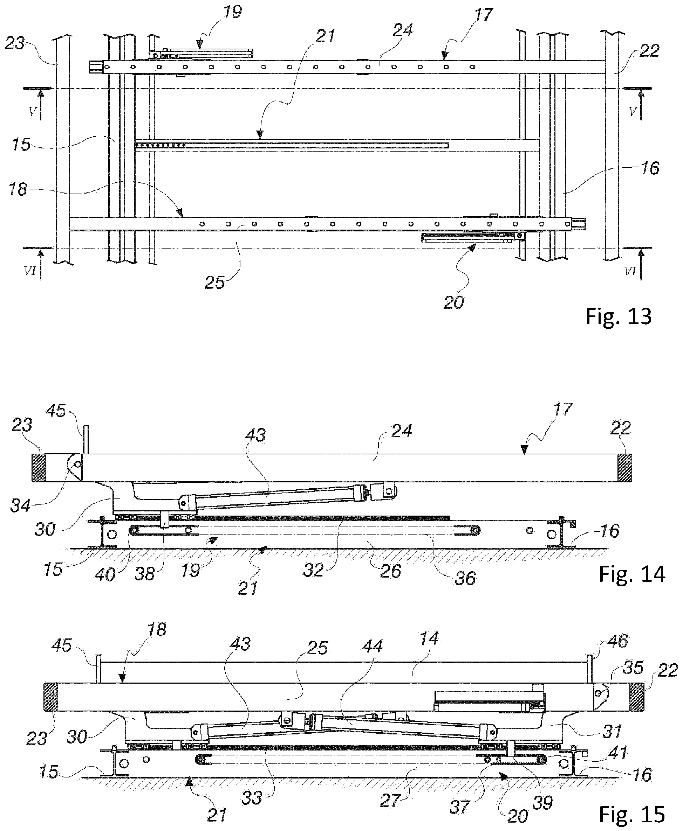

Figures 13 to 20 show similarly to what is shown for the lifting members, an executive example of overturning members, for example of the overturning members provided in working zone 1.

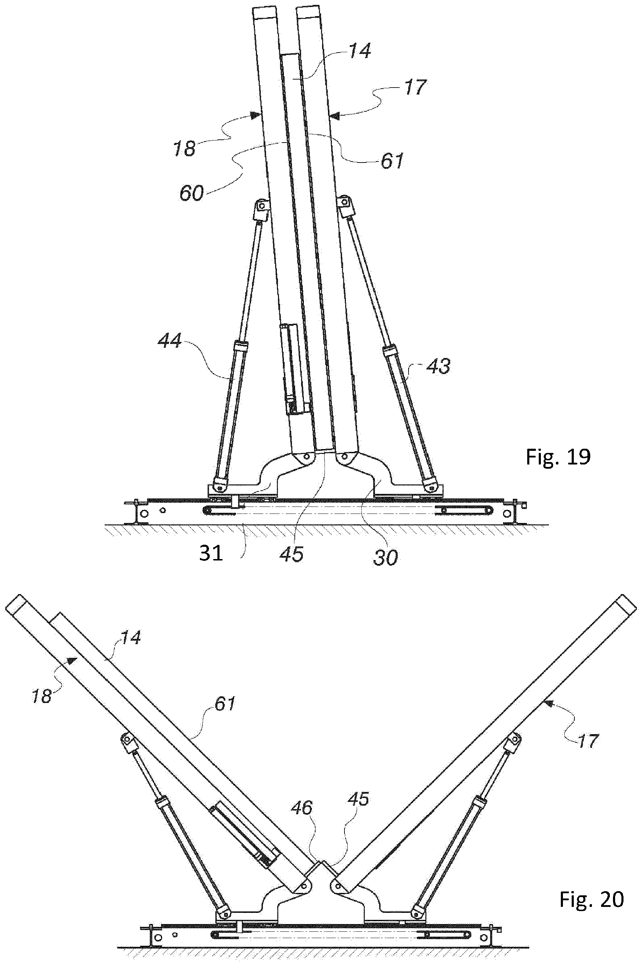

According to this preferred but non-limiting embodiment, the overturning members 301 comprise two opposite support and movement frames 17 and 18, both equipped with translation and rotation means, 19 and 20 respectively, with respect to a stationary base frame 21. These translation and rotation means, 19 and 20, described in greater detail below, are configured in such a way as to allow each support and movement frame 17 and 18 to achieve the following arrangements:
- lowered substantially horizontally visible in figures 14 and 15,
- inclined and facing the other opposite support and movement frame for the overturning of a prefabricated wall being worked indicated with 14 and carried by a first support and movement frame 17, as in figure 15, on the second opposite support frame and movement 18, as shown in figure 19.

Each of the two frames 17 and 18 is substantially comb-shaped, with a longitudinal member 22 and 23 respectively, and a series of crosspieces 24 and 25, fixed orthogonally to the respective longitudinal bar.

The two frames 17 and 18 are arranged so that in the longitudinal direction a crosspiece 24 of a first frame 17 and a crosspiece 25 of the second frame 18 alternately meet.

The translation and rotation means, 19 and 20, provide for each frame 17 and 18, at least two translation and rotation assemblies, applied to two respective spaced apart crosspieces of the corresponding frame.

The rotation translation means 19 and 20 are interposed between a crosspiece, for example a crosspiece 25 of the second frame 18 and a corresponding underlying crosspiece 26 and 27 of the base frame 21.

These translation and rotation means 19 and 20 include a slide 30 and 31, arranged to slide on a guide 32 and 33 located above the corresponding crosspiece 26 or 27 of the base frame 21. It is hinged to the slide 30 and 31, with fulcrum 34 and 35, the corresponding crosspiece 24 and 25 of the support and movement frame 17 and 18.

The linear guide system 32 and 33 and the rotation fulcrum 34 and 35 are present on all the crosspieces 24 and 25 of the two frames 17 and 18, while the translation and rotation means 19 and 20 are present only at a number limited number of crosspieces, for example two crosspieces for each frame 17 and 18.

The slide 30 and 31 is moved with respect to its guide 32 and 33 by pushing or traction means, for example, by a chain transmission 36 and 37, which chain 36 and 37 is connected to the slide 30 and 31 by a bracket 38 and 39.

The chain 36 and 37 is driven by a pinion 40 and 41 keyed onto a drive shaft extending longitudinally to the direction of development of the work surface 13 and simultaneously driving all the chains 36 and 37 relating to the same frame 17 and 18 through corresponding pinions.

The movement of the slide 30 and 31, through the motion of the chains, is given by a gearmotor, not illustrated for simplicity and to be understood as being of a known type, which activates the drive shaft on which the pinions are keyed which drive the chain on which it is fixed the bracket 38 and 39 respectively.

As an alternative to the use of a chain system, it is equivalently intended to be able to use a linear actuator, of the piston cylinder type, or another electric linear actuator, to be understood as being of a known type.

The translation and rotation means 19 and 20 include, for carrying out the rotation, a linear actuator 43 and 44 interposed between the slide 30 and 31 and the corresponding support frame crosspiece 24 and 25.

This linear actuator 43 and 44 is given by a fluid-dynamic, hydraulic or pneumatic cylinder, or by an actuator with electric motorization, or by another equivalent linear actuator.

The wall 14 being worked is kept in position on the frames 17 and 18 by means of fixed abutments 45 and 46, fixed at the ends respectively to the crosspieces 24 and 25 of the two frames 17 and 18, and movable abutments. These are carried, for example, by a slide sliding on a guide fixed to the crosspiece 25 of the second frame 18, and similarly to a crosspiece 24 of the first frame 17. The slide is moved by a linear actuator such as, for example, a cylinder fluid dynamic actuator.

The supports, both fixed and mobile, are preferably retractable, that is, they can be operated in translation along their axis to disappear below the support surface of the corresponding crosspiece to which they are associated.

The functioning of said overturning organs is as follows:

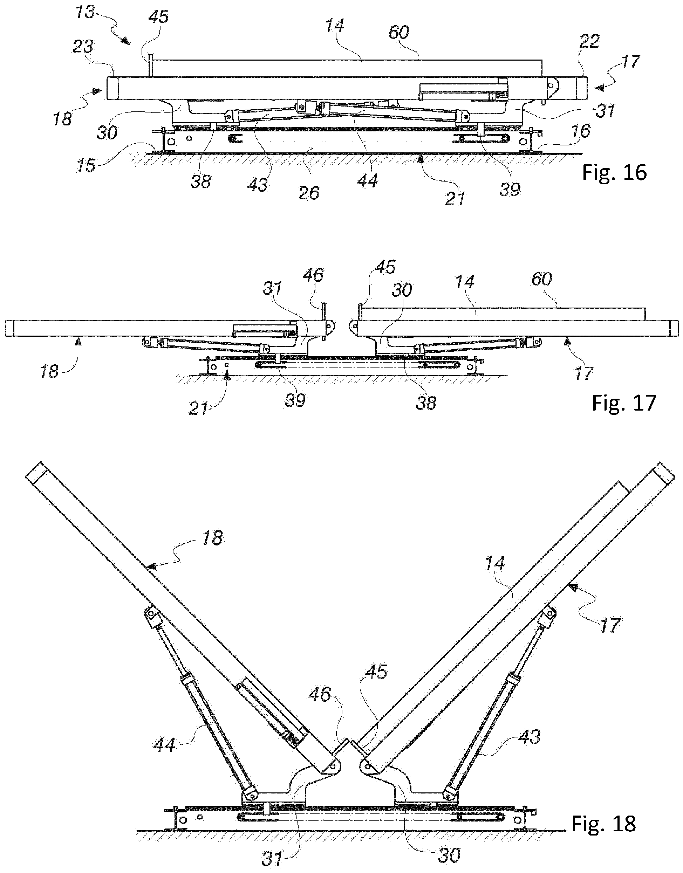

In figure 16 the work surface 13 is in a lowered, i.e. horizontal, position for processing a wall 14 placed on it with a first face 60 facing upwards.

To overturn the wall 14, in a first step, the two frames 17 and 18 move back laterally towards the outside with respect to the base frame 21 as shown in figure 17, with the wall resting on the supports, for example the fixed supports 45, remains on the first frame 17.

Subsequently, or simultaneously with the lateral retreat, the frames 17 and 18 rotate pushed by the linear actuators 43 and 44, as shown in figure 18, to face each other as shown in figure 19.

In the arrangement of figure 19, the passage of the wall 14 takes place from the first frame 17 to the second frame 18, with the wall 14 resting at the bottom on the abutments 45 and 46 of both the first frame 17 and the second frame 18, and with the first face 60 of the wall 14 resting on the second frame 18.

Figure 20 exemplifies a descent position of the two frames 17 and 18 with the wall 14 now carried, in an overturned condition, by the second frame 18, therefore with the second face 61 of the wall 14 facing upwards and which will be available to the drop-down processing completed.

It is important to consider that said overturning member can also constitute the work surface of the working zone 1, avoiding the overturning zone 3 and therefore allowing the longitudinal footprint of the machine itself to be reduced.

It is also important to consider that the overturning members described constitute only one possible embodiment and that said organs can also be made in a different way.

Finally, as regards the configuration of the support structure for one or more working tools, this can for example be in the form of a mobile portal with a "five-axis" milling head, or including a portal that translates along a first longitudinal X axis and parallel to the work surface, with a tool carring carriage which translates along a second Y axis transverse to the first axes, in turn including a cutter-holding electrospindle which is possibly associated with an automatic tool change device.

According to yet another embodiment, said tool-holding head can include two opposing spindles provided at two opposite ends of a rotational drive shaft, at least one of which carries or can be coupled to a circular saw.

## Claims

1. Machine for processing walls, in particular for walls made of wood or the like, which machine comprises:
a support structure (2) for at least one working tool (201), which support structure is provided with displacement members (9) in at least one direction with respect to at least one working station and which support structure has members for moving (204, 205) said at least one tool (201) along one or more directions of movement in the direction of and/or around one or more axes and relative to said working station, or to the part to be worked, in particular to the wall to be worked on (14), for carrying out at least one or a plurality of processes in one or more areas of said part to be worked and wherein
the working station comprises two working zones of which a first (zone 1) and a second working zone (zone 2), which are adjacent and aligned with each other according to a direction parallel to the direction of movement of said support structure (2) of said at least one tool (201);
said support structure (2) being positioned on a carriage or sled sliding along a guide and/or a rail (9) oriented in said direction of movement and which guide extends over the entire extension of the work planes of the said first and second working zones (zone 1, zone 2) in a direction parallel to said direction of movement of the support structure (2), so that the support structure (2) can be moved in correspondence with and along the work plan of said first zone and said second working zone (zone 1, zone 2) ;
the first of said two working zones (zone 1) being provided in combination with a device (17, 18) for overturning said wall to be worked (14) upside down;
the second of said two working zones (zone 2) being provided with a horizontal to substantially vertical overturning member (6) of said wall to be worked (14), which vertical overturing member (6) is provided with member for discharging (5) of said finished prefabricated wall,
said first and/or said second working zone (zone 1, zone 2) are provided with translation members (605, 606, 607, 608) of said wall to be worked from one of said two working zones (zone 1, zone 2) to the other.

2. Machine according to claim 1, wherein the work plane (13) both in said first working zone and in said second working zone (zone 1, zone 2) can be constituted by or comprise moving members (605, 606, 607, 608) the wall being worked (14), which can be activated and deactivated alternatively.

3. Machine according to claim 2, the moving members (605, 606, 607, 608) the wall being processed from said first to said second working zone are integrated into the work surface and alternated with one or more stationary supports and said members can be moved to the wall disengagement position during working, in a position of engagement thereof, in which they lift said wall from said one or more stationary supports, defining at the same time the supports of the stationary wall.

4. Machine according to one or more of the preceding claims, wherein the work surface (13) has a length corresponding to or greater by a prederminate extent to the maximum double length envisaged for a prefabricated wall (14) and a width substantially identical to or greater by a predetermined extent to the maximum envisaged height for a prefabricated wall (14), said two working zones (zone 1, zone 2) being aligned with each other in the direction of said length of the work surface (13) and having substantially half of the overall length of the same and the support structure (2) for said one or more tools (201) being slidably mounted by means of a carriage or a slide along at least one rail (9) or guide oriented parallel to said lengthwise extension of the work surface (13) and arranged externally adjacent to one or both longitudinal edges of said work surface (13).

5. Machine according to one or more of the preceding claims, wherein said overturning device comprise overturning members which are constituted by elements of the work surface of said first zone and wherein said overturning members comprise:
- two opposite support and movement frames (17, 18), both equipped with translation means (30, 31, 32, 33) in the direction of the width of the work surface and rotation means (34, 35, 24, 25) with respect to a base frame (21), fixed, which two opposite support frames (17, 18) are configured in such a way as to allow each frame of support and movement to create the following arrangements:
- lowered to a substantially horizontal position during the working of a wall;
- inclined upwards, in a substantially vertical position and facing the other opposite support and movement frame for the overturning of a wall carried by a first support and movement frame onto the second opposite support and movement frame and wherein
each of the two support and movement frames (17, 18) is substantially comb-shaped, with a longitudinal bar and a series of crosspieces fixed orthogonally to the respective longitudinal bar, while
each said support and movement frame (17, 18) has at least two translation and rotation units, (30, 31, 32, 33, 34, 35, 43, 44) applied to respective spaced crosspieces (24, 25) of the corresponding frame;
said units being interposed between a crosspiece (24, 25) of the corresponding frame and a corresponding crosspiece (26, 27) below of the base frame (21)
each of said units further comprising a slide (30, 31) mounted sliding on a guide (32, 33) placed above the corresponding crosspiece (26, 27) of the base frame (21) and to which slide (30, 31) the corresponding crosspiece (24, 25) of the support and movement frame (17, 18) is hinged (34, 35), which slide (30, 31) is moved along said guide (32, 33) by means of motorized thrust and/or traction members (36, 37, 40, 41).

6. Machine according to one or more of the preceding claims, wherein said overturning member of the finished prefabricated wall from the work surface of said second working zone (zone 2) are constituted by oscillating lifting members and comprise a support surface or crosspieces for the wall being processed which form an oscillating frame (6) around a longitudinal lateral axis of the work plane of said second working zone (zone 2).

7. Machine according to claim 6, wherein said lifting members comprise a frame comprising a plurality of crosspieces and longitudinal members, which oscillating frame (6) is articulated to a stationary base frame element (5) by means of a articulated parallelogram lever system (501, 502, 504, 601) configured to generate an oscillation of said frame (6) around a horizontal axis and oriented parallel to the longitudinal extension of the work surface, as well as substantially coincident with or adjacent to a lateral edge of the same, a linear actuator (7) being provided for activating said oscillatory motion between said oscillating frame (6) and a stationary base frame element (5) and said oscillating frame (6) can be oscillated from the horizontal position to a vertical position wherein the support surface of the prefabricated wall (14) is provided laterally facing outwards.

8. Machine according to one or more of the preceding claims, wherein laterally alongside the lateral edge of said work surface and substantially coinciding with the lower longitudinal edge of the said overturning member, or of the oscillating frame (6), there is provided a carriage (5) for transporting said wall, in said position substantially vertical or slightly inclined with respect to the vertical direction, intended for the transfer of the prefabricated wall to a warehouse for said walls.

9. Machine according to claims 7 and 8, wherein said overturning member of the prefabricated wall is pivotally articulated to a base frame (5) by means of an articulated parallelogram which comprises a stationary arm (501) rigidly attached to said stationary base frame (5), at the ends of said stationary arm being articulated, in an oscillating manner around horizontal axes and parallel to the longitudinal side of the work surface, respectively two angled arms (502, 503), preferably with angles having the intrados area oriented opposite to the central longitudinal axis of the work surface and which in turn connect to a fourth arm which is integral with or consist of an end segment of a corresponding crosspiece (601) of the oscillating frame (6) of the lifting member, respectively in correspondence with the end of said crosspiece (601) in correspondence with the lateral edge of the longitudinal axis of said oscillating frame (6) and of an intermediate point between said end and the central longitudinal axis of the said oscillating frame (6), said segment being preferably made in the form of an angled arm so that the fulcrums of the two arms angled (502, 503) to it are not coplanar with respect to a plane parallel to the support surface of the oscillating frame (6).

10. Machine according to one or more of the preceding claims, wherein a rest zone (3) is provided between said first working zone (zone 1) and said second working zone (zone 2), at least temporarily for the support structure (2) of the tool(s) (201), from which intermediate rest zone (3) said structure (2) can pass in correspondence with said first working zone (zone 1) and/or said second working zone (zone 2) and in which intermediate rest zone (3), said structure (2) moves or is transferred following detection by sensors of obstacles along the movement path of said support structure (2) in said first and/or in said second working zone (zone 1, zone 2) and/or following a specific resting command generated by means of a man-machine command interface.

11. Method of manufacturing prefabricated walls which method provides for a machine according to one or more of the previous claims and wherein
in the first zone (zone 1) of the working station, the frame is made to which a plurality of covering plates are applied on the visible face of the frame which form the corresponding face of the wall and in which plates, after their fastening to the frame, are notched or otherwise the openings relating to windows and/or doors or other being made, at least some of said processes being performed by means of automatic robotic tools (201) and/or at least in part, manually, by human personnel, which automatic means consist at least in part of one or more tools (201) carried by the mobile portal, or by the aforementioned more generic support structure (2);
at the conclusion of these constructive steps, the said upside-down overturning device (17, 18) of the wall (14) is activated when provided integrated or associated with said first working zone (zone 1) and which overturning provides for bringing the face of the wall being worked provided with the slabs in a position facing against the work surface and contextually the opposite face of the wall frame facing upwards in an accessible position for carrying out the further processing steps;
said further working steps being performed in said second working zone (zone 2), in which said wall being worked on is transferred by translation (605, 606, 607, 608) and which further working steps include:
the positioning of filling material between the beams of the frame, such as, but not limited to, thermal insulating material or material having other functions, the application of the slabs of material which form the corresponding face of the wall, as well as the creation of the provided openings on the said facade,
said operations being performed by means of automatic robotic tools (201) and/or at least in part, manually, by human personnel, which automatic means comprise at least in part by one or more tools (201) carried by the mobile portal, or by the aforementioned more generic support structure (2), which has been moved within the second working zone (zone 2),
while simultaneously with the execution of said further processing steps of a prefabricated wall (14) in said second working zone (zone 2) of the machine's work surface, the initial processing steps of a new prefabricated wall (14) are performed in the first working zone (zone 1), as the mobile portal, i.e. the support structure (2), is moved again to the first working zone (zone 1) once the processing operations in the second working zone (zone 2) have been completed and
the finished prefabricated wall (14) present in the second working zone (zone 2) being unloaded therefrom by means of the lifting members (6), before the passage of the new wall being worked on from said first working zone (zone 1) to said second working zone (zone 2) .

12. The method according to claim 11 wherein,
an intermediate rest zone (3) is provided between said first and said second working zones (zone 1, zone 2),
the presence of obstacles along the path of movement of the support structure (2) of the tool(s) (201) is monitored;
and said support structure (2) is commanded automatically or by command to move into said rest zone (3) when the presence of an obstacle along its path of movement is detected;
and said support structure (2) is held in said rest zone (3) at least as long as said obstacle is present along its path or said support structure (2) is only moved along the working zone in which said obstacle is not present.
